# EUROPÄISCHE PATENTSCHRIFT

(11) **EP 0 617 355 B1**
(45) Veröffentlichungstag und Bekanntmachung des Hinweises auf die Patenterteilung: **13.10.1999**
(21) Anmeldenummer: 94101617.2
(22) Anmeldetag: 02.02.1994
(51) Int. Cl.: G06F 1/20, H05K 7/20, G05D 23/19

(54) **Lüftersteuerung**
Fan control
Régulation d'un ventilateur

(30) Priorität: 22.03.1993 DE 4309187
(43) Veröffentlichungstag der Anmeldung: 28.09.1994
(73) Patentinhaber: Siemens Nixdorf Informationssysteme Aktiengesellschaft, 33102 Paderborn (DE)
(72) Erfinder: Rieken, Ralf, D-32805 Horn-Bad Meinberg (DE)
(74) Vertreter: Epping, Wilhelm, Dr.-Ing.

(56) Entgegenhaltungen:
- EP-A- 0 300 717
- WO-A-92/22863
- DE-A- 3 938 018
- US-A- 4 817 865
- US-A- 5 102 040

## Beschreibung

### Technisches Gebiet

Es handelt sich um eine Steuerung von Lüftern, wie sie in Geräteschränken, vorzugweise in Computern, benutzt wird, um Wärme aus dem Gehäuse durch strömende Luft abzuführen.

### Stand der Technik

Der Einsatz von Lüftern in Geräteschränken und Computern ist allgemein bekannt. Dabei müssen die Lüfter so angeordnet und dimensioniert werden, daß eine Überhitzung der elektronischen Komponenten in allen zugelassenen Betriebsbedingungen ausgeschlossen ist. Soweit Geräte in Laborräumen oder Rechenzentren eingesetzt werden, ist die Auslegung der Lüfter relativ einfach, da aus einer vorgegebenen maximalen Zulufttemperatur von z.B. 25°C und der maximalen Leistungsaufnahme des Geräts die benötigte Luftmenge und damit die Anzahl und Leistung der Lüfter bestimmt werden kann. Es erfolgt also eine Auslegung auf die ungünstigsten Bedingungen.

Diese Auslegung der Lüfter auf Maximalleistung bewirkt jedoch ein hohes Betriebsgeräusch des Geräts. Insbesondere beim Betrieb von Rechnern in leiser Umgebung, beispielsweise in Büroräumen, ist das Geräusch störend. Es sollte möglichst nur wenig oberhalb des von Klimaanlagen üblicherweise erzeugten Pegels von 40 dBa liegen.

Häufig werden Geräte mit Modulplätzen ausgestattet, so daß verschiedene Gerätevarianten mit demselben Gehäuse bereitgestellt und beim Kunden verändert werden können. In der deutschen Patentschrift DE 3938018 C2 wird ein solches System beschrieben, bei dem verschiedene Adapter in variabler Anzahl und Anordnung in Slots montiert werden können und eine Informationsverarbeitungseinrichtung von in Slots montierten Adaptern ein Adapter-ID-Signal erhalten kann und somit die Art und Anzahl von montierten Adaptern emitteln kann. Die Lüftersteuerung muß dabei auf Maximalbestückung ausgelegt sein und ist damit bei Teilausstattung überdimensioniert und überflüssig laut. Da gefordert ist, daß Moduln beim oder vom Kunden einfach installiert werden können, eine nachträgliche Montage von Lüftern aber nur schwer möglich ist, müssen alle Lüfter für die Maximalbestückung installiert sein.

Es wurde daher vorgeschlagen, die Lüfter zwar auf die ungünstigsten Bedingungen auszulegen, sie jedoch nur bei Bedarf mit voller Leistung arbeiten zu lassen. Durch einen Temperatursensor werden dabei bei niedriger Temperatur die Lüfter mit verminderter Förderleistung betrieben. Um die Anzahl der Moduln zu berücksichtigen, muß dann jedoch der Fühler an der Abluftseite angebracht werden und eine Regelung erfolgen. Beispielsweise wird in dem Artikel "Eliminate Fan Noise from Your Computer" von Dick Pountain in Byte, Januar 1990, eine solche Lüftersteuerung für Tischcomputer angegeben, die den Lüfter eines Tischcomputers über die Ablufttemperatur regelt. Eine ähnliche Lösung ist in der schwedischen Auslegeschrift SE 467 475 dargestellt, bei der gleichfalls ein Lüfter in einem Tischcomputer durch Temperatursensoren gesteuert wird. Umfangreiche Untersuchungen haben ergeben, daß dieses Verfahren erhebliche Probleme aufweist. Örtliche Überhitzungen sind nicht ausgeschlossen, da sie meist nicht ausreichend zur Temperatur des Gesamtluftstroms beitragen. Ist die Wärmeabgabe, z.B. bei Prozessoren, abhängig von der Rechenlast, so sind Regelschwingungen nicht zu vermeiden. Diese lassen in störender Art das Geräusch des Lüfters an- und abschwellen und führen zu Temperaturschwankungen auf den Moduln, was deren Lebensdauer negativ beeinflußt.

Eine weitere Lösung ist im Dokument US-A-5 102 040 dargestellt.

Zusätzliche Probleme treten auf, wenn mehrere Lüfter notwendig sind. Eine Einzelregelung der Lüfter durch in der Nähe der Lüfter angeordnete autonome Temperaturfühler bewirkt, daß die Lüfter mit unterschiedlicher Drehzahl laufen, was zu Schwebungen durch akustische Überlagerung der Laufgeräusche führt, die als sehr störend und unangenehm empfunden werden.

Es ist daher eine Lösung zu finden, bei der die Steuerung der Lüfterleistung auch bei teilweise bestücktem Gerät effizient, gleichmäßig und zuverlässig erfolgt.

### Darstellung der Erfindung

Der Lösung liegt die Erkenntnis zugrunde, daß insbesondere in Datenverarbeitungsanlagen die Konfiguration, d.h. die Anzahl, Art und Lage der Baugruppen, beim Einschalten durch Logikschaltungen oder auch Software ermittelt wird, aber bislang von dieser Information nur seitens der Betriebssoftware Gebrauch gemacht wird. Die Erfindung besteht nun darin, für die Lüftersteuerung einen Rechner einzusetzen, der über Signalpfade zu der Daten verarbeitungsanlage deren Konfiguration ermittelt und anhand dieser Daten die Lüfter entsprechend einem berechneten Lüftungsbedarf steuert. Die Erfindung ist in den Ansprüchen 1 und 13 definiert.

### Kurzbeschreibung der Zeichnungen

Es zeigen
- Fig. 1: eine Rechnersystem mit modularem Aufbau, Lüftern und einer Lüftersteuerung,
- Fig. 2: eine mögliche Steuercharakteristik für die Lüfter,
- Fig. 3: ein Rechnersystem mit erweitertem Aufbau.

### Detaillierte Beschreibung der Erfindung

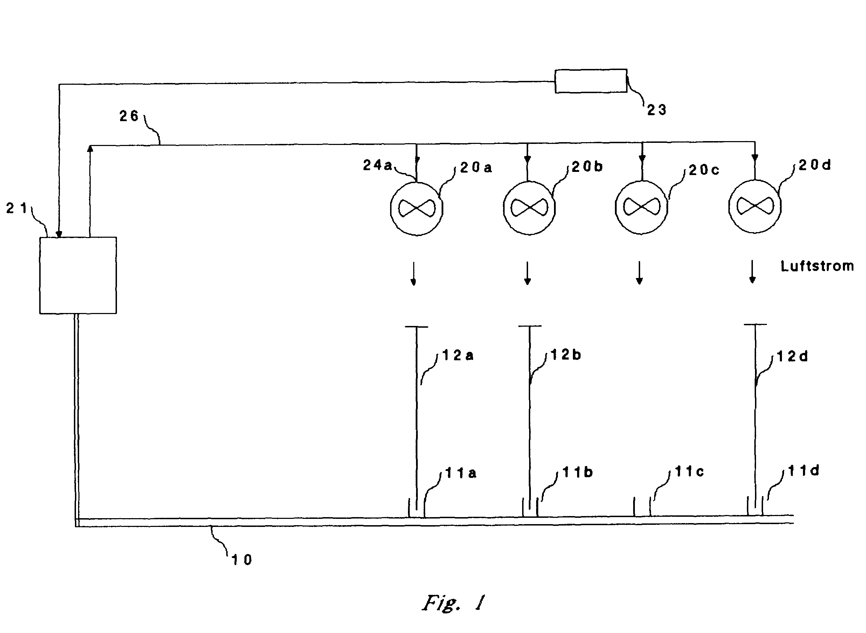

In Fig. 1 ist ein Rechnersystem mit Modulplätzen 11a..d dargestellt, wobei als Beispiel alle Plätze bis auf Platz 11c mit einem Modul besetzt sind. Solche Modulplätze werden in der Regel auf einer gemeinsamen Trägerplatte, auch Rückwand genannt, montiert. Dabei versorgt die Rückwand die Moduln mit den benötigten Betriebsspannungen und stellt Signalpfade zwischen den Moduln zur Verfügung. Diese Signalpfade dienen zur Übermittlung von Daten zwischen den Moduln 12a..d und werden üblicherweise als Bussystem 10 mit parallelen Daten- und Steuerleitungen ausgeführt. Die Verwendung eines Bussystems bietet besondere Vorteile, die später im einzelnen erläutert werden. Die Ausführung ist aber auch mit anderen Formen der Datenübertragung, insbesonder stern- oder maschenförmig verschalteten Netzwerken, möglich. Es ist auch unerheblich, ob für die noch zu beschreibenden Übertragungen dedizierte Signalpfade ausschließlich oder vorhandene mitbenutzt werden.

Ferner sind Lüfter 20a..d vorhanden, die beispielsweise wie durch Pfeile angedeutet Luft zu den Moduln blasen und damit bewirken, daß die auf den Moduln entstehende Wärmeleistung abgeführt wird. Die Lüfter können aber auch mit saugender Wirkung, also mit gegenüber der Darstellung in Fig. 1 umgekehrter Transportrichtung der Luft wirken.

Weiterhin ist eine Lüftersteuerung 21 vorhanden, die über Steuerleitungen 26 auf die Lüfter 20a..d dergestalt einwirkt, daß sie die Förderleistung der Lüfter steuern kann. Dies erfolgt beispielsweise durch Steuerung der Betriebsspannung über fernbedienbare Spannungs- oder Leistungssteller bekannter Art (nicht dargestellt). Eine reduzierte Betriebsspannung führt dabei bei üblichen Ausführungsformen von Lüftern zu einer reduzierten Förderleistung. Es sind aber auch Lüfter bekannt, die zusätzlich zu den Anschlüssen für die Betriebsspannung einen zusätzlichen Steuereingang 24 aufweisen, der dann von der Lüftersteuerung 21 beaufschlagt wird.

Die Lüftersteuerung 21 ist mit den Moduln 12a..d über Datenleitungen 10 verbunden. Bei der in Fig. 1 dargestellten Ausführungsform ist die Lüftersteuerung 21 ein separater Modul, der über Datenleitungen mit den Moduln 12a..d verbunden ist. Diese Datenleitungen können beispielsweise die Verlängerung des von den Moduln ohnehin benutzten Busses 10 sein. Zur vereinfachten Beschreibung wird angenommen, daß die Lüftersteuerung 21 in bekannter Art durch einen programmierbaren Mikroprozessor realisiert wird, das Bussystem als Signalpfad 10 zur Verbindung verwendet wird und die Adressen in diesem Bussystem die Adressen der Modulplätze sind.

Nach dem Einschalten der Betriebsspannung steuert die Lüftersteuerung 21 zunächst alle Lüfter 20a..d auf Maximalleistung. Danach ermittelt die Lüftersteuerung 21 nacheinander, ob in jedem der Modulplätze 11a..d ein Modul 12a..d vorhanden ist. Hierzu sendet die Lüftersteuerung 21 nacheinander mit allen im Maximalausbau möglichen Adressen eine Nachricht, die von dem angesprochenen Modul quittiert wird. Ist ein Platz leer, so bleibt die Quittung aus. Damit verfügt die Lüftersteuerung über die Anzahl der Moduln. Zwischen einem Mindestwert und dem Maximalwert der Steuerspannung für die Lüfter wird mit der Anzahl der Moduln linear oder nichtlinear interpoliert und die so berechnete Steuerspannung dann auf die Lüfter gegeben, deren Förderleistung damit auf das notwendige Maß reduziert wird.

Die Anzahl der Moduln kann auch über andere Signalpfade festgestellt werden. Beispielsweise könnte zu jedem Modulplatz eine Leitung führen. Jeder gesteckte Modul verbindet die Leitung mit Massepotential. Durch Abfrage der Leitungen kann die Lüftersteuerung somit die Anzahl der Moduln ermitteln. Dieser Signalpfad überträgt ein Bit.

Sofern die Antwort der Moduln mehr als ein Bit lang sein kann, kann der Modul auch seine Art zurückübermitteln, beispielsweise als Codenummer aus einer vorher festgelegten Liste von Moduln. In dieser Liste ist für jeden Modul die Leistungsabgabe notiert. Damit berechnet die Lüftersteuerung dann aus der Leistungsabgabe ein Leistungsaufnahmeäquivalent, daraus die notwendige Förderleistung und stellt diese ein.

Sofern, wie weiter unten am Beispiel eines Personal Computers detailliert dargestellt, das Betriebssystem die Art und Anzahl der Moduln bestimmt, kann diese Information mit einer Signalübertragung direkt vom Betriebssystem zur Lüftersteuerung übertragen werden und ansonsten so verfahren werden, als ob die Lüftersteuerung diese Daten autonom ermittelt.

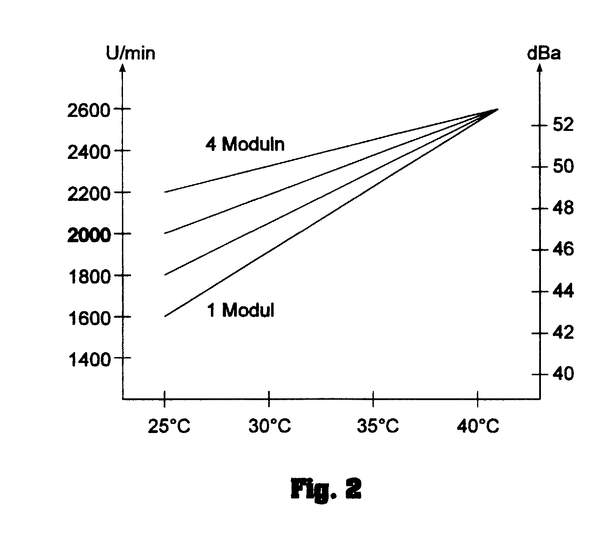

In einer vorteilhaften Weiterbildung der Erfindung wird die Lüftersteuerung 21 zusätzlich mit einem Temperatursensor 23 verbunden, der in der bevorzugten Ausführungsform im Zuluftstrom der Lüfter angeordnet ist. Aus der Anzahl oder Leistungsabgabe der Moduln und der Zulufttemperatur wird dann die notwendige Förderleistung berechnet, beispielsweise entsprechend Fig. 2, und eingestellt. Es können auch mehr als ein Temperatursensor verwendet werden, bei denen dann vorzugsweise die höchste der gemessenen Temperaturen in die Berechnung Eingang finden.

Mit einem oder mehreren Temperatursensoren ist eine kontinuierliche Steuerung der Förderleistung möglich, indem das (unveränderliche) Leistungsaufnahmeäquivalent mit der jeweils aktuellen Zulufttemperatur verknüpft wird. Gleichfalls ist eine Überwachung möglich, so daß beispielsweise beim Einsatz bei hohen Umgebungstemperaturen bei einer Zulufttemperatur, die eine ausreichende Kühlung auf Dauer nicht zuläßt, eine Warneinrichtung betätigt oder auch, bei einer Rechenanlage, das Betriebsprogramm dazu veranlaßt werden kann, die Abschaltung einzuleiten. Dabei können entsprechend der Zulufttemperatur auch verschiedene Stufen der Warnung und Abschaltung bis zur sofortigen Zwangsabschaltung durchgeführt werden, weil die Lüftersteuerung die Toleranzschwelle bis zur Überhitzung abschätzen kann. Insbesondere kann ab einer festgelegten oder bei schnell ansteigender Zulufttemperatur sofort auf maximale Förderleistung geschaltet werden.

Temperatursensoren können auch zusätzlich in dem Abluftweg oder außerhalb der Luftwege angeordnet werden. Diese Temperaturen werden dann mit der Zulufttemperatur verglichen, so daß beispielsweise dort ermittelte Werte, die eine aus der Zulufttemperatur abgeleitete Schwelle übersteigen, anstelle der Zulufttemperatur verwendet werden, um zuverlässig eine Überhitzung zu vermeiden.

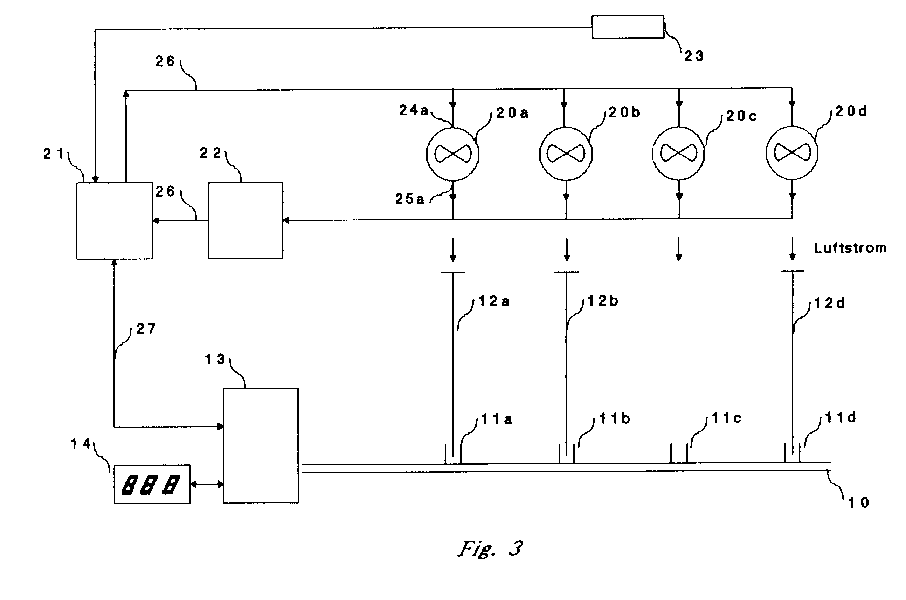

Weitere vorteilhafte Weiterbildungen der Erfindung werden an Hand der Fig. 3 beschrieben.

In einer dieser Weiterbildungen werden Lüfter verwendet, die einen Ausgang haben, mit dessen Hilfe auf die Drehzahl des Lüfters und damit auf die Förderleistung geschlossen werden kann. Dies kann beispielsweise ein Kommutierungssignal sein, dessen Frequenz proportional der Drehzahl ist. Bei Lüftern, die dieses Signal nicht liefern, entstehen häufig drehzahlproportionale Impulse auf der Versorgungsspannung, die beispielsweise in dem oben erwähnten Leistungssteller mit ausgewertet und als Kommutierungssignal weitergeleitet werden können.

Das Kommutierungssignal wird zu einer Überwachungsschaltung 22 geführt, die in bekannter Art eine Unterschreitung der Mindestfrequenz feststellt und über eine Oder-Verknüpfung ein Signal erzeugt, das in bekannter Art vorzugsweise als Unterbrechungssignal für eine mit einem Mikroprozessor realisierte Lüftersteuerung dient. Mit Auftreten des Unterbrechungssignals geht die Lüftersteuerung in einen Störungszustand und stellt alle Lüfter auf Maximalleistung, um einer Überhitzung entgegenzuwirken. Sind eine Anzeigeeinrichtung, wie in Fig. 3 mit 14 bezeichnet, oder auch Signalpfade zu einem Betriebssystem vorhanden, so wird der Störzustand angezeigt bzw. übermittelt. Bei ausreichender Rechenleistung der Lüftersteuerung ist auch eine direkte Verabeitung des Kommutierungssignals ohne eine zusätzliche Überwachungsschaltung 22 durchführbar.

In einer anderen, zusätzlich einsetzbaren Weiterbildung wird ein Konsolinterface 13 eingesetzt, das insbesondere bei Systemen mit Bus-Rückwand Verwendung findet. Dieses Konsolinterface 13 ermittelt die Anzahl oder auch Art der vorhandenen Moduln, wobei die Bus-Rückwand 10 den Signalpfad darstellt, und ist über einen weiteren Signalpfad 27 mit der Lüftersteuerung 21 verbunden. Während der Einschaltphase ermittelt das Konsolinterface 13 die Modulinformation und überträgt diese dann an die Lüftersteuerung 21. Das Konsolinterface 13 verfügt möglicherweise über eine Anzeigeeinheit 14, auf der auch eine über den Signalpfad 27 in Rückrichtung übermittelte Störung angezeigt werden kann. Der Vorteil eines getrennten, auf den Geräteschrank zugeschnittenen Konsolinterfaces liegt darin, daß damit die Lüftersteuerung unabhängig von den Signalpfaden auf der Rückwand ist und beispielsweise bei Datenverarbeitungsanlagen für verschiedene Systemfamilien gleich sein kann.

Bei sehr kleinen Datenverarbeitungsanlagen, beispielsweise Personal Computern, kann die Funktion der Lüftersteuerung (21) vom Betriebsprogramm mit übernommen werden. Bei Personal Computern wird unmittelbar nach dem Einschalten durch die Betriebssoftware feststellt, welche Funktionen und Moduln vorhanden sind. Aus dieser Information kann dann die benötigte Lüfterleistung festgestellt und über eine Ausgabeoperation an den dort meist nur einfach vorhandenen Lüfter weitergeleitet werden. Besitzt der Lüfter einen Eingang zum Anschluß eines temperaturabhängigen Widerstands als Temperatursensor, so kann dieser Temperatursensor in der Zuluft angeordnet werden und parallel hierzu ein vom Rechner aus steuerbarer Widerstand gelegt werden, wobei entsprechend der Modulinformation dieser steuerbare Widerstand gesetzt und damit die Steigung der Lüfterleistung ähnlich Fig. 2 eingestellt werden kann. In diesem Anwendungsfall ist es unerheblich, daß nicht festgestellt werden kann, durch wieviele Einzel-Moduln die erkannten Funktionen bereitgestellt werden, da beispielsweise der Speicherausbau und die Anzahl der Datenfernübertragungsschnittstellen einen brauchbaren Rückschluß auf die Leistungssabgabe zulassen ungeachtet der Tatsache, auf welche und wieviele Moduln diese Funktionen tatsächlich verteilt werden.

Eine weitere Fortbildung der Erfindung benutzt die Möglichkeit, daß von manchen Netzteilen ein Kennwert für die Leistungsaufnahme des Geräts aus dem Netz oder die Leistungsabgabe an die Verbraucher abgegeben wird. Diese Kennzahl kann dann entweder direkt verwendet werden oder vozugsweise mit der Zulufttemperatur verknüpft werden und damit die Förderleistung der Lüfter steuern. Damit kann jedoch nicht der Unterschied zwischen einem einzelnen Modul besonders hoher Leistungsaufnahme und mehreren Moduln geringer Leistungsaufnahme festgestellt werden. Im ersteren Fall ist eine höhere Förderleistung erforderlich, da sich die Förderleistung immer nach dem Spitzenbedarf richten muß, der in diesem Fall nur auf einem Modulplatz vorliegt. Daher benutzt die bevorzugte Ausführungsform der Erfindung die Anzahl und Art der Moduln und zieht die Leistungsaufnahme oder -Abgabe des Netzteils nur als zusätzlichen Parameter in der Berechnung der notwendigen Förderleistung hinzu.

In einer weiteren Fortbildung wird eine höchstzulässige Umgebungstemperatur von z.b. 35°C für das Gesamtsystem festgelegt und dem Betreiber gegenüber genannt. Die Steuerung der Lüfter erfolgt aber bis zu einer um 5°C darüberliegenden Temperatur. Oberhalb von 35°C am Fühler 23 meldet die Lüftersteuerung 21 diesen Zustand an die Bedieneinheit 13, welche eine Anzeige bewirkt oder auch ein Signal an das Betriebssystem übermittelt. Damit kann, wie oben dargestellt, ein abrupter Ausfall des Systems selbst bei überhöhten Umgebungstemperaturen vermieden werden.

## Patentansprüche

1. Verfahren zur Steuerung der Förderleistung eines oder mehrerer Lüfter (20a..d) in einem Gerät mit einem oder mehreren Modulplätzen (11a..c) zur Aufnahme von Moduln (12a..d),
wobei eine Lüftersteuerung (21) eine Modulinformation, die das Vorhandensein und damit die Anzahl oder auch die Art der angeschalteten Moduln angibt, über einen Signalpfad, der mit dem Gerät verbunden ist, ermittelt und daraus gemäß einem vorbestimmten Algorithmus die Förderleistung der Lüfter (20a..d) einstellt.

2. Verfahren nach Anspruch 1, wobei die Lüftersteuerung (21) mit den Moduln (12a..c) über ein gemeinsames Bussystem (10) oder getrennte Signalpfade verbunden ist und über diese die Modulinformation ermittelt.

3. Verfahren nach Anspruch 1, wobei das Gerät eine Datenverarbeitungsanlage mit einem Betriebsprogramm ist, das die Modulinformation bereitstellt und über einen Signalpfad an die Lüftersteuerung (21) überträgt.

4. Verfahren nach einem der Ansprüche 1 bis 3 mit mindestens einem Sensor (23) für eine Zulufttemperatur, die von der Lüftersteuerung mit der Modulinformation verknüpft und entsprechend dem Ergebnis der Verknüpfung die Förderleistung der Lüfter (20a..d) eingestellt wird.

5. Verfahren nach Anspruch 4, wobei aus der Modulinformation eine Leistungszahl gebildet, mit der Zulufttemperatur multipliziert und die Förderleistung proportional dazu geführt wird.

6. Verfahren nach Anspruch 4 oder 5, wobei bei Überschreitung einer vordefinierten Zulufttemperatur oder auch einer vordefinerten Anstiegsgeschwindigkeit der Zulufttemperatur die Lüftersteuerung (21) einen Störungszustand annimmt und vorzugsweise daraufin alle Lüfter (20a..20d) auf maximale Förderleistung steuert.

7. Verfahren nach einem der Ansprüche 1 bis 6, wobei die Lüfter (20a..d) eine Drehzahlinformation an die Lüftersteuerung (21) übertragen und diese bei Unterschreiten einer vordefinierten oder von der Solldrehzahl abgeleiteten Mindestdrehzahl einen Störungszustand annimmt und vorzugsweise daraufhin alle Lüfter (20a..d) auf maximale Förderleistung steuert.

8. Verfahren nach einem der Ansprüche 1 bis 6, wobei die Lüfter (20a..d) eine Drehzahlinformation an eine Überwachungsschaltung (22) übertragen, diese bei Unterschreiten einer vordefinierten oder von der Lüftersteuerung (21) gesetzten Mindestdrehzahl ein Signal (29), vorzugsweise ein Unterbrechungssignal, an die Lüftersteuerung (21) sendet, welche daraufhin einen Störungszustand annimmt und vorzugsweise alle Lüfter (20a..d) auf maximale Förderleistung steuert.

9. Verfahren nach einem der vorhergehende Ansprüche, wobei das Gerät ein Bedienfeld (14) aufweist und die Lüftersteuerung (21) einen Störungszustand dortselbst zur Anzeige bringt.

10. Verfahren nach einem der vorhergehenden Ansprüche, wobei eine Bedienschnittstelle (13) die Modulinformation über einen Signalpfad (10) zu den Moduln (12a..d) ermittelt und über einen zweiten Signalpfad (27) an die Lüftersteuerung (21) weiterleitet.

11. Verfahren nach einem der vorhergehenden Ansprüche 6 bis 10, wobei die Lüftersteuerung (21), wenn sie einen Störungszustand annimmt, ein Signal an das Betriebsprogramm sendet, insbesondere um ein ordnungsgemäßes Anhalten des Betriebsprogramms zu bewirken.

12. Verfahren nach einem der vorhergehenden Ansprüche, wobei die Lüftersteuerung über einen weiteren Signalpfad von dem das Gerät mit Energie versorgenden Netzteil einen Wert für die Leistungsaufnahme oder -Abgabe ermittelt und als zusätzlichen Parameter in der Berechnung der notwendigen Förderleistung benutzt.

13. Anordnung zur Steuerung der Förderleistung eines oder mehrerer Lüfter (20a..d) in einem Gerät mit einem oder mehreren Modulplätzen (11a..d) zur Aufnahme von Moduln (12a..d) und mit einer Lüftersteuerung (21), die einerseits mit den Moduln (12a..d) über einen Signalpfad (10, 10a) zur Übertragung einer Modulinformation, die das Vorhandensein und damit die Anzahl oder auch die Art der angeschalteten Moduln angibt, und andererseits mit Einrichtungen zur Einstellung der Förderleistung der Lüfter (20a..c) verbunden ist und daraus gemäß einem vorbestimmten Algorithmus die Förderleistung der Lüfter (20a..d) einstellt.

14. Anordnung nach Anspruch 13, wobei ein Konsolinterface (13), das die Modulinformation über einen ersten Signalpfad (10) ermittelt und an die Lüftersteuerung (21) über einen zweiten Signalpfad (27) weiterleitet.

15. Anordnung nach Anspruch 13 oder 14, wobei die Lüfter (20a..d) einen Eingang zum Anschluß eines Temperatursensors, vorzugsweise eines PTC-Widerstands, haben, der von der Lüftersteuerung (21) elektrisch beaufschlagt wird.

16. Anordnung nach einem der Ansprüche 13 bis 15, wobei zusätzlich mindestens ein Sensor (22) für die Zulufttemperatur mit der Lüftersteuerung (21) verbunden ist.

17. Anordnung nach einem der Ansprüche 13 bis 16, wobei die Lüfter (20a..d) einen Ausgang (25a..c) mit einer Drehzahlinformation haben, der mit der Lüftersteuerung (21) verbunden ist.

18. Anordnung nach einem der Ansprüche 13 bis 16, wobei die Lüfter (20a..d) einen Ausgang (25a..c) mit einer Drehzahlinformation haben, der mit einer Überwachungsschaltung (22) für die Drehzahlinformation verbunden ist und die Überwachungsschaltung (22) ihrerseits mit der Lüftersteuerung (21) verbunden ist.

19. Anordnung nach einem der Ansprüche 13 bis 18, wobei der Lüftersteuerung (21) über einen Signalpfad ein Kennwert für die Leistungsaufnahme oder -Abgabe des Netzteils des Geräts zugeführt wird.

## Claims

1. Method for controlling the output of one or more fans (20a..d) in an appliance having one or more module compartments (11a..c) for the reception of modules (12a..d), a fan control (21) determining module information, which indicates the presence and therefore the number or else the type of connected modules, via a signal path connected to the appliance and setting the output of the fans (20a..d) according to a predetermined algorithm on the basis of the said module information.

2. Method according to Claim 1, the fan control (21) being connected to the modules (12a..c) via a common bus system (10) or separate signal paths and determining the module information via these.

3. Method according to Claim 1, the appliance being a data-processing system with an operating program which provides the module information and which transmits it to the fan control (21) via a signal path.

4. Method according to one of Claims 1 to 3, with at least one sensor (23) for a supply-air temperature, which is linked to the module information by the fan control, the output of the fans (20a..d) being set according to the result of the link.

5. Method according to Claim 4, a performance figure being formed from the module information and being multiplied by the supply-air temperature, and the output being controlled in proportion to this.

6. Method according to Claim 4 or 5, if a predefined supply-air temperature or else a predefined rate of rise of the supply-air temperature is exceeded the fan control (21) assuming a fault state and preferably thereupon controlling all the fans (20a..20d) at maximum output.

7. Method according to one of Claims 1 to 6, the fans (20a..d) transmitting rotational-speed information to the fan control (21), and the latter, if the rotational speed falls short of a predefined minimum rotational speed or a minimum rotational speed derived from the desired rotational speed, assuming a fault state and preferably thereupon controlling all the fans (20a..d) at maximum output.

8. Method according to one of Claims 1 to 6, the fans (20a..d) transmitting rotational-speed information to a monitoring circuit (22), and the latter, if the rotational speed falls short of a predefined minimum rotational speed or a minimum rotational speed set by the fan control (21), sending a signal (29), preferably an interruption signal, to the fan control (21) which thereupon assumes a fault state and preferably controls all the fans (20a..d) at maximum output.

9. Method according to one of the preceding claims, the appliance having an operator panel (14), and the fan control (21) indicating a fault state on the said operator panel.

10. Method according to one of the preceding claims, an operator interface (13) determining the module information via a signal path (10) to the modules (12a..d) and transferring the said module information to the fan control (21) via a second signal path (27).

11. Method according to one of the preceding Claims 6 to 10, the fan control (21), when it assumes a fault state, sending a signal to the operating program, in particular in order to cause the operating program to stop correctly.

12. Method according to one of the preceding claims, the fan control determining, via a further signal path from the power supply supplying the appliance with energy, a value for the power consumption or power delivery and utilizing the said value as an additional parameter in the calculation of the necessary output.

13. Arrangement for controlling the output of one or more fans (20a..d) in an appliance having one or more module compartments (11a..d) for the reception of modules (12a..d) and having a fan control (21) which is connected, on the one hand, to the modules (12a..d) via a signal path (10, 10a) for the transmission of module information which indicates the presence and consequently the number or else the type of connected modules, and, on the other hand, to devices for setting the output of the fans (20a..c) and which sets the output of the fans (20a..d) according to a predetermined algorithm on the basis of the said module information.

14. Arrangement according to Claim 13, a console interface (13) determining the module information via a first signal path (10) and transferring it to the fan control (21) via a second signal path (27).

15. Arrangement according to Claim 13 or 14, the fans (20a..d) having an input for connecting a temperature sensor, preferably a PTC resistor, which receives electrical signals from the fan control (21).

16. Arrangement according to one of Claims 13 to 15, at least one sensor (22) for the supply-air temperature being additionally connected to the fan control (21).

17. Arrangement according to one of Claims 13 to 16, the fans (20a..d) having an output (25a..c) with rotational-speed information, the said output being connected to the fan control (21).

18. Arrangement according to one of Claims 13 to 16, the fans (20a..d) having an output (25a..c) with rotational-speed information, the said output being connected to a monitoring circuit (22) for the rotational-speed information, and the monitoring circuit (22), in turn, being connected to the fan control (21).

19. Arrangement according to one of Claims 13 to 18, a characteristic value for the power consumption or power delivery of the power supply of the appliance being fed to the fan control (21) via a signal path.

## Revendications

1. Procédé de commande du débit d'un ventilateur ou de plusieurs ventilateurs (20a...20d) dans un appareil comportant un emplacement ou plusieurs emplacements (11a...11c) de réception de modules (12a...12d),
une commande (21) de ventilateur déterminant, par l'intermédiaire d'une voie de signaux, qui est reliée à l'appareil, une information sur les modules qui indique la présence et donc le nombre ou aussi le genre des modules raccordés et réglant à partir de cette information, suivant un algorithme prédéterminé, le débit des ventilateurs (20a...20d).

2. Procédé suivant la revendication 1,
la commande (21) de ventilateur étant reliée aux modules (12a...12c) par l'intermédiaire d'un système (10) de bus commun ou par l'intermédiaire de voies de signaux distinctes et déterminant l'information sur les modules par l'intermédiaire de ce système de bus ou de ces voies de signaux.

3. Procédé suivant la revendication 1, l'appareil étant une installation de traitement de données à programme d'exploitation, qui met à disposition l'information sur les modules et la transmet par la commande (21) de ventilateur par l'intermédiaire d'une voie de signaux.

4. Procédé suivant l'une des revendications 1 à 3, comportant au moins un capteur (23) pour une température d'air affluent, qui est combiné à l'information sur les modules par la commande de ventilateur, le débit des ventilateurs (20a...20d) étant réglé suivant le résultat de la combinaison.

5. Procédé suivant la revendication 4, il est formé, à partir de l'information sur les modules, un indice de puissance, par lequel la température de l'air affluent est multipliée et le débit est commandé proportionnellement à cela.

6. Procédé suivant la revendication 4 ou 5, la commande 21 de ventilateur prenant, en cas de dépassement d'une température de l'air affluent définie à l'avance ou aussi d'une vitesse d'accroissement définie à l'avance de la température de l'air affluent, un état d'incident et commandant de préférence ensuite tous les ventilateurs (20a...20d) au débit maximum.

7. Procédé suivant l'une des revendications 1 à 6, les ventilateurs (20a...20d) transmettant une information sur la vitesse de rotation à la commande (21) de ventilateur et celle-ci prenant, au cas où l'on est au-dessous d'une vitesse de rotation minimum définie à l'avance ou déduite de la vitesse de rotation de consigne, un état d'incident et commandant de préférence ensuite tous les ventilateurs (20a...20d) au débit maximum.

8. Procédé suivant l'une des revendications 1 à 6, les ventilateurs (20a...20d) transmettant une information sur la vitesse de rotation à un circuit (22) de surveillance, ce circuit émettant, dans le cas où on est au-dessus d'une vitesse de rotation minimum définie à l'avance ou établie par la commande (21) de ventilateur, un signal (29), de préférence un signal d'interruption, à destination de la commande (21) de ventilateur, qui prend alors un état d'incident et, de préférence, commande tous les ventilateurs (20a...20d) au débit maximum.

9. Procédé suivant l'une des revendications précédentes, l'appareil comportant une zone (14) de commande et la commande (21) de ventilateur y affichant un état d'incident.

10. Procédé suivant l'une des revendications précédentes, une interface (13) de commande déterminant l'information sur les modules par l'intermédiaire d'une voie (10) de signaux allant aux modules (12a...12d) et la retransmettant à la commande (21) de ventilateur par l'intermédiaire d'une deuxième voie (27) de signaux.

11. Procédé suivant l'une des revendications 6 à 10 précédentes, la commande (21) de ventilateur émettant, quand elle prend un état d'incident, un signal à destination du programme d'exploitation, notamment pour provoquer un arrêt correct du programme d'exploitation.

12. Procédé suivant l'une des revendications précédentes, la commande de ventilateur déterminant, par l'intermédiaire d'une voie de signaux supplémentaire venant de la partie du réseau alimentant l'appareil en énergie une valeur de la puissance consommée ou de la puissance absorbée et l'utilisant comme paramètre supplémentaire dans le calcul du débit nécessaire.

13. Dispositif de commande du débit d'un ventilateur ou de plusieurs ventilateurs (20a...20d) dans un appareil ayant un emplacement ou plusieurs emplacements (11a...11d) de réception de module (12a...12d) et comportant une commande (21) de ventilateur, qui est reliée d'une part aux modules (12a...12d) par l'intermédiaire d'une voie (10,10a) de signaux de transmission d'une information sur les modules, qui indique la présence et donc le nombre ou aussi le genre des modules raccordés, et d'autre part à des dispositifs de réglage du débit des ventilateurs (20a...20c) et qui, à partir de cette information, règle le débit des ventilateurs (20a...20d) suivant un algorithme prédéterminé.

14. Dispositif suivant la revendication 13, une interface (13) à console, qui détermine l'information sur les modules par l'intermédiaire d'une première voie (10) de signaux et la retransmet à la commande (21) de ventilateur par l'intermédiaire d'une deuxième voie (27) de signaux étant prévue.

15. Dispositif suivant la revendication 13 ou 14, les ventilateurs (20a...20d) ayant une entrée pour le raccordement d'un capteur de température, de préférence une résistance à un coefficient positif de température, qui est alimentée du point de vue électrique par la commande (21) de ventilateur.

16. Dispositif suivant l'une des revendications 13 à 15, au moins un détecteur (22) pour la température de l'air affluent étant de plus relié à la commande (21) de ventilateur.

17. Dispositif suivant l'une des revendications 13 à 16, les ventilateurs (20a...20d) ayant une sortie (25a...25c) qui a une information sur la vitesse de rotation et qui est reliée à la commande (21) de ventilateur.

18. Dispositif suivant l'une des revendications 13 à 16, les ventilateurs (20a...20d) ayant une sortie (25a...25c) qui a une information sur la vitesse de rotation et qui est reliée à un circuit (22) de surveillance de l'information sur la vitesse de rotation, et le circuit (22) de surveillance est relié pour sa part à la commande (21) de ventilateur.

19. Dispositif suivant l'une des revendications 13 à 18, une valeur caractéristique de la puissance consommée ou de la puissance absorbée de l'alimentation de l'appareil étant envoyée à la commande (21) de ventilateur par l'intermédiaire d'une voie de signaux.
